# EUROPÄISCHE PATENTANMELDUNG

(11) **EP 4 836 227 A1**
(43) Veröffentlichungstag der Anmeldung: **04.11.2026**
(21) Anmeldenummer: 25173581.7
(22) Anmeldetag: 30.04.2025
(51) Int. Cl.: H02J 3/38

(54) **INSELFÄHIGER PV-WECHSELRICHTER**

(71) Anmelder: FRONIUS INTERNATIONAL GmbH, 4643 Pettenbach (AT)
(72) Erfinder: Die Erfindernennung liegt noch nicht vor
(74) Vertreter: Weiss Patentanwalts GmbH

(57) **Zusammenfassung**

Um eine nahtlose Umschaltung zwischen Netzbetrieb und Inselbetrieb mit einem PV-Wechselrichter zu ermögliche, ist vorgesehen, dass der PV-Wechselrichter (3) im Netzbetrieb zum Umschalten in den Inselbetrieb in Abhängigkeit von einem vorgegebenen Umschaltkriterium eine Netztrennstelle (9) öffnet, dass der PV-Wechselrichter (3) im Inselbetrieb zumindest einen Netzparameter (P2) des elektrischen Versorgungsnetzes (1) erfasst, und die Ersatznetzspannung (U_{E}) an eine vorgegebene Versorgungsnetzspannung (U_{V}) des Versorgungsnetzes (1) anpasst, wenn der zumindest eine Netzparameter (P2) eine vorgegebene Auslösebedingung erfüllt, wobei die Ersatznetzspannungsfrequenz (f_{E}) der Ersatznetzspannung (U_{E}) um maximal 2 Hz von der Versorgungsnetzspannungsfrequenz (f_{V}) abweicht, dass die Trenneinheit (8) nach der Anpassung bei geöffneter Netztrennstelle (9) einen Phasenlagenunterschied (Δφ) zwischen einer Phase der Versorgungsnetzspannung (U_{V}) und einer zugehörigen Phase der Ersatznetzspannung (U_{E}) ermittelt und dass die Trenneinheit (8) zur Umschaltung in den Netzbetrieb die Netztrennstelle (9) selbstständig schließt, wenn der erfasste Phasenlagenunterschied (Δφ) einen vorgegebenen Phasenlagengrenzwert unterschreitet.

## Beschreibung

Die gegenständliche Erfindung betrifft ein Verfahren zum Betreiben eines PV-Wechselrichters, der in einem Netzbetrieb mit einem elektrischen Versorgungsnetz verbunden ist und eine elektrische Netzspannung mit einer Netzspannungsamplitude und mit einer Netzspannungsfrequenz, und im Falle eines mehrphasigen Versorgungsnetzes auch mit einer Netzspannungsphasenlage, in das Versorgungsnetz und/oder in einen mit dem PV-Wechselrichter verbundenen elektrischen Verbraucher einspeist und der in einem Inselbetrieb vom elektrischen Versorgungsnetz getrennt ist und eine elektrische Ersatznetzspannung mit einer Ersatznetzspannungsamplitude und mit einer Ersatznetzspannungsfrequenz, und im Falle eines mehrphasigen Versorgungsnetzes auch mit einer Ersatznetzspannungsphasenlage, in den elektrischen Verbraucher, die im Inselbetrieb zusammen mit dem PV-Wechselrichter ein Inselnetz ausbildet, einspeist. Die Erfindung betrifft außerdem eine Anordnung aus PV-Wechselrichter und einer Trenneinheit, die zur Umsetzung dieses Verfahrens zum Betreiben eingerichtet sind.

Es ist bekannt, dass manche Photovoltaik (PV) Wechselrichter in der Lage sind, zwischen einem Netzbetrieb und einem Inselbetrieb umzuschalten. Im Netzbetrieb ist der PV-Wechselrichter mit dem elektrischen Versorgungsnetz verbunden und speist (unter der Voraussetzung, dass Solarenergie verfügbar ist) elektrische PV-Energie in das Versorgungsnetz und/oder in eine Speicherbatterie ein. Wenn keine Solarenergie verfügbar ist, dann werden die Verbraucher im Netzbetrieb vom Versorgungsnetz versorgt. Im Inselbetrieb ist der PV-Wechselrichter vom elektrischen Versorgungsnetz getrennt und der PV-Wechselrichter bildet eine Energiequelle für das sich ausbildende Inselnetz. Im Inselbetrieb verwendet der PV-Wechselrichter elektrische PV-Energie oder elektrische Energie aus einer Speicherbatterie zur Versorgung der elektrischen Lasten (z.B. eines Einfamilienhauses) im sich ausbildenden Inselnetz und/oder speist elektrische PV-Energie in eine Speicherbatterie ein. Das Umschalten zwischen Netzbetrieb und Inselbetrieb erfolgt beispielsweise, wenn das elektrische Versorgungsnetz ausfällt oder wenn ungewöhnliche Netzparameter (wie elektrische Spannungsamplitude, Frequenz, Phasenlage) im Versorgungsnetz festgestellt werden. Ein lokaler Betreiber eines Versorgungsnetzes kann hierzu auch Vorgaben machen, wann sich ein PV-Wechselrichter vom Versorgungsnetz trennen darf oder muss.

Es gibt PV-Wechselrichter, die ein nahezu nahtloses Umschalten zwischen Netzbetrieb und Inselbetrieb ermöglichen. Hierzu muss aber der elektrische Hausanschluss durch den PV-Wechselrichter geführt werden, weil die Trennstelle zum Versorgungsnetz im PV-Wechselrichter ist. Das macht eine Nachrüstung einer elektrischen Hausanlage mit einer PV-Anlage aber sehr schwierig, weil dazu der Hausanschluss geändert oder verlegt werden muss, was oftmals nur sehr schwer oder gar nicht möglich ist. Abgesehen davon wäre im Falle eines Defekts des PV-Wechselrichters auch der Hausanschluss betroffen und es könnte das Haus im schlimmsten Fall bis Reparatur des PV-Wechselrichters vom Versorgungsnetz getrennt sein, selbst wenn ein Versorgungsnetz vorhanden ist.

Andere PV-Wechselrichter ermöglichen ein Umschalten zwischen Netzbetrieb und Inselbetrieb, ohne dass der Hausanschluss durch den PV-Wechselrichter geführt ist. Hierzu ist eine vom PV-Wechselrichter getrennte Trennstelle vorgesehen, die beispielsweise im elektrischen Schaltschrank angeordnet ist. Das bedarf zum einen einer Kommunikation zwischen der externen Trennstelle und dem PV-Wechselrichter. Zum anderen trennt die Trennstelle eigenständig den PV-Wechselrichter vom Versorgungsnetz, wenn das Versorgungsnetz abfällt. Der PV-Wechselrichter schaltet anschließend ab, da die Versorgungsspannung aus dem Versorgungsnetz ausfällt, wonach der PV-Wechselrichter den Inselbetrieb startet. Die Betriebsführung solcher PV-Wechselrichter erfordert im Falle einer Netztrennung, dass der PV-Wechselrichter zuerst abgeschaltet wird und im Inselbetrieb neu starten muss, was einige Zeit (typischerweise einige Minuten) in Anspruch nimmt. Die Abschaltung erfolgt aufgrund des Wegfalls der Netzspannung. Danach startet der PV-Wechselrichter im Inselmodus mit Vorgaben für den Inselbetrieb (insb. elektrische Spannung und Frequenz). Bis zum Abschluss des Neustarts gibt es keine elektrische Versorgung im Inselnetz. Vor der Wiederzuschaltung des PV-Wechselrichters an das Versorgungsnetz muss sich der PV-Wechselrichter wieder abschalten, um sich beim Einschalten auf das Versorgungsnetz zu synchronisieren. Damit dauert es wieder einige Zeit (typischerweise einige Minuten) bis der PV-Wechselrichter wieder in das Versorgungsnetz einspeisen darf. Die Umschaltung von Inselbetrieb auf Netzbetrieb, sodass die Verbraucher wieder aus dem Versorgungsnetz mit elektrischer Energie versorgt werden, erfolgt schneller. Aber auch das dauert in der Regel einige Sekunden, was für machen Verbraucher ausreicht, dass diese sich abschalten. Eine nahtlose Umschaltung ist aber weder beim Umschalten vom Netzbetrieb in den Inselbetrieb noch im umgekehrten Fall möglich. Grundsätzlich müssen bei jedem Neustart des PV-Wechselrichters auch systembedingte Selbsttests und Kalibrierungsvorgänge durchgeführt werden, was die Zeitdauer für einen Neustart ebenso erhöht. Diese Art der Umschaltung zwischen Netzbetrieb und Inselbetrieb ist aufgrund der Unterbrechungen der elektrischen Versorgung unbefriedigend.

Beide heute bekannten Konzepte einer Umschaltung zwischen Netzbetrieb und Inselbetrieb haben folglich ihre Nachteile. Es besteht damit ein Bedarf an einer nahtlosen Umschaltung zwischen Netzbetrieb und Inselbetrieb mit einem PV-Wechselrichter, ohne den obigen Nachteilen.

Das wird mit einem Verfahren nach Anspruch 1 und einer Anordnung aus PV-Wechselrichter mit Trenneinheit nach Anspruch 7 ermöglicht.

Die örtliche Trennung der Trenneinheit vom PV-Wechselrichter ermöglicht eine einfache Installation und insbesondere auch eine einfache Nachrüstung in einer bestehenden elektrischen Anlage. Indem der PV-Wechselrichter das Öffnen der Netztrennstelle aufgrund des vorgegebenen Umschaltkriteriums selbst veranlasst, kann der PV-Wechselrichter die Spannungserzeugung unterbrechungsfrei fortsetzen, da er selbst über die Umschaltung in den Inselbetrieb entscheidet. Damit erkennt der PV-Wechselrichter nicht wie im Stand der Technik erst durch den Wegfall des Versorgungsnetzes (weil die Trenneinheit die Verbindung zum Versorgungsnetz unterbricht) die Störung im Versorgungsnetz, was den Wechselrichter zum Abschalten und Neustarten zwingt, sondern kann seinen Betrieb nahtlos fortsetzen. Durch das selbsttätige Schließen der Netztrennstelle durch die Trenneinheit in Kombination mit der Anpassung der Ersatznetzspannung mit leicht von der Versorgungsnetzspannungsfrequenz abweichender Ersatznetzspannungsfrequenz sind zum Umschalten aus dem Inselbetrieb in den Netzbetrieb wiederum keine zeitkritischen Abstimmungen zwischen der Trenneinheit und dem PV-Wechselrichter oder schnelle Netztrennstellen erforderlich. Die Trenneinheit kann den richtigen Zeitpunkt zum Umschalten damit einfach erkennen und das Umschalten veranlassen. Da der PV-Wechselrichter dabei bereits die Versorgungsnetzspannung (abgesehen von einem kleinen, nicht störenden Frequenzunterschied) erzeugt, kann wiederum nahtlos und unterbrechungsfrei aus dem Inselbetrieb in den Netzbetrieb umgeschaltet werden.

Vorteilhaft erfasst der PV-Wechselrichter im Netzbetrieb zumindest einen weiteren Netzparameter des elektrischen Versorgungsnetzes und öffnet die Netztrennstelle, wenn der zumindest eine erfasste weitere Netzparameter als Umschaltkriterium eine vorgegebene weitere Auslösebedingung erfüllt. Damit kann das Umschalten direkt aus dem Zustand des Versorgungsnetzes abgeleitet werden. Das ermöglicht es, sehr flexibel verschiedenste Auslösebedingungen festzulegen, die entweder vom Netzbetreiber vorgegeben sein können oder auch anders festgelegt sein können.

Das Umschaltkriterium kann aber eine versorgungsnetzrelevante Information sein und/oder ein Umschaltkriterium, das der PV-Wechselrichter selbst erzeugt, und/oder ein Umschaltkriterium das dem PV-Wechselrichter von extern zugeführt wird. Damit kann ein Umschalten in den Inselbetrieb auch über eine andere Bedingung als eine vom Versorgungsnetz über den Netzparameter abgeleitete Bedingung ausgelöst werden.

In einer vorteilhaften Implementierung können gleichzeitig auch mehrere Umschaltkriterien überwacht werden.

Für den Inselbetrieb ist es vorteilhaft, wenn die Ersatznetzspannung nach Umschaltung in den Inselbetrieb auf eine für den Inselbetrieb vorgegebene Ersatznetzspannungsamplitude und Ersatznetzspannungsfrequenz geändert wird. Damit kann der Inselbetrieb unabhängig vom Zustand des Versorgungsnetzes vor der Umschaltung in den Inselbetrieb durchgeführt werden.

Zur Erhöhung der Betriebssicherheit, kann die Trenneinheit mit dem Öffnen der Netztrennstelle ein erstes Rückmeldesignal an den PV-Wechselrichter senden, wobei der PV-Wechselrichter die Einspeisung der Ersatznetzspannung nach Ablauf einer vorgegebenen Maximalzeitspanne ohne Erhalt des ersten Rückmeldesignals beendet.

Gleichfalls kann die Betriebssicherheit erhöht werden, wenn der PV-Wechselrichter während des Inselbetriebs ein Verriegelungssignal an die Trenneinheit sendet, um ein Schließen der Netztrennstelle während des Inselbetriebs zu verhindern.

Es ist vorteilhaft, wenn der PV-Wechselrichter zur Umschaltung in der Netzbetrieb nach Anpassung der Ersatznetzspannung an die vorgegebene Versorgungsnetzspannung ein Freigabesignal an die Trenneinheit sendet und die Trenneinheit die Netztrennstelle nur schließt, wenn die Trenneinheit zusätzlich das Freigabesignal erhalten hat. Das gibt dem PV-Wechselrichter zusätzliche Kontrolle über die Umschaltung in den Netzbetrieb, beispielsweise um sicherzustellen, dass ein Umschalten nur bei hinreichend stabilem Versorgungsnetz erfolgt.

Für die Erhöhung der Betriebssicherheit ist es außerdem vorteilhaft, wenn die Trenneinheit mit dem Schließen der Netztrennstelle ein zweites Rückmeldesignal an den PV-Wechselrichter sendet, wobei der PV-Wechselrichter die Einspeisung der Ersatznetzspannung als Netzspannung im Netzbetrieb nach Ablauf einer vorgegebenen maximalen Erkennungszeit ohne Erhalt des zweiten Rückmeldesignals beendet.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 ein Versorgungsnetz mit PV-Wechselrichter und dazwischen angeordneter Trenneinheit zur Umschaltung zwischen Netzbetrieb und Inselbetrieb,
Fig.2 eine Implementierung der Erkennung der Phasensynchronität zweier Spannungen und
Fig.3 eine Ausführung der Trenneinheit.

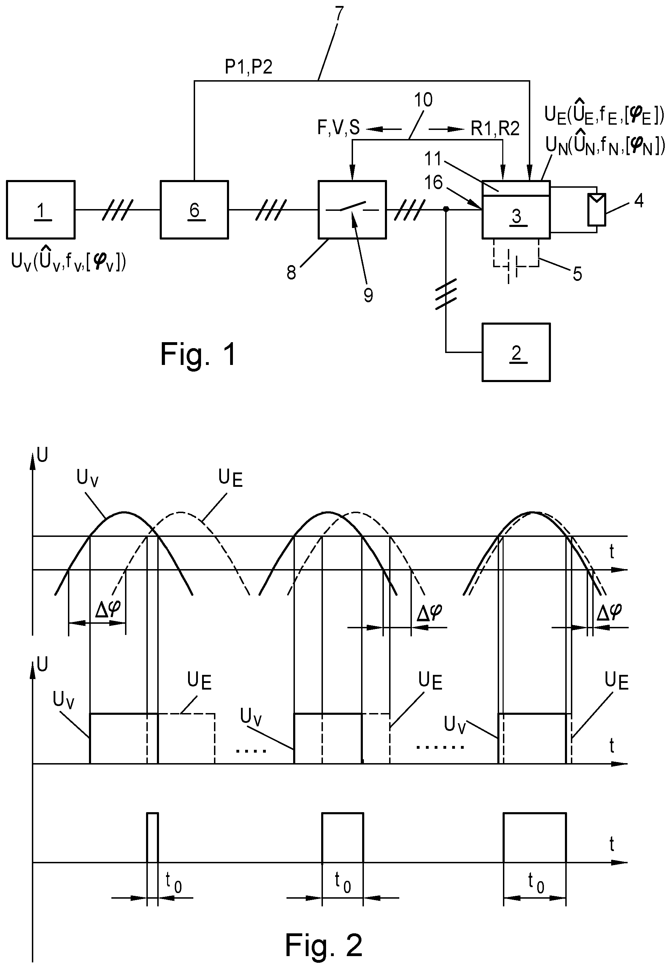

In Fig.1 ist ein elektrisches Versorgungsnetz 1 dargestellt, das zur Versorgung eines elektrischen Verbrauchers 2 dient, wie es beispielsweise bei einem typischen Hausanschluss der Fall ist. Durch das Versorgungsnetz 1 wird elektrische Energie in Form einer Versorgungsnetzspannung U_{V} des Versorgungsnetzes 1 bereitgestellt. Im Ausführungsbeispiel nach Fig.1 liegt ein dreiphasiges Versorgungsnetz 1 vor mit drei elektrischen Phasen der Versorgungsnetzspannung U_{V} (angedeutet durch ///). Das Versorgungsnetz 1 hat allgemein zumindest eine elektrische Phase. Das Versorgungsnetz 1 kann bekanntermaßen auch einen Neutralleiter und/oder einen Erdleiter umfassen. Das Versorgungsnetz 1 muss aber nicht zwingend ein öffentliches elektrisches Netz sein, sondern kann irgendein elektrisches Netz sein, beispielsweise ein von einem Notstromaggregat bereitgestelltes Netz.

Die Versorgungsnetzspannung U_{V} hat eine Versorgungsnetzspannungsamplitude Û_{V} und eine Versorgungsnetzspannungsfrequenz f_{V}, und im Falle eines mehrphasigen Versorgungsnetzes auch eine Versorgungsnetzspannungsphasenlage φ_{V} zwischen den elektrischen Phasen der Versorgungsnetzspannung U_{V} (im Falle eines dreiphasigen Netzes typischerweise 120°).

Es sei angemerkt, dass in einem mehrphasigen Netz, die Netzspannungsamplituden der einzelnen Phasen nicht unbedingt gleich sein müssen (beispielsweise bei asymmetrischer Belastung des Netzes) und dass auch andere Störungen vorhanden sein können (beispielsweise durch höherfrequente (höher als die Netzfrequenz) Spannungsanteile). Das ist aber für die gegenständliche Erfindung unbeachtlich, weshalb in den weiteren Ausführungen vereinfacht immer nur von einer Netzspannungsamplitude, einer Netzspannungsfrequenz und einer Netzspannungsphasenlage gesprochen wird.

Der elektrische Verbraucher 2 ist ein beliebiger Verbraucher, in der Regel eine Kombination mehrerer verschiedener Verbraucher, beispielsweise alle aktiven elektrischen Verbraucher eines Einfamilienhauses. Üblicherweise zwischen dem Versorgungsnetz 1 und dem Verbraucher 2 vorhandene elektrische Einrichtungen, insbesondere Sicherheitseinrichtungen, einer elektrischen Installation, wie Stromzähler, elektrische Sicherungen, Überstromschutzschalter, Fehlerstrom-Schutzschalter, Trennschalter usw. sind aus Gründen der Übersichtlichkeit und weil für die Erfindung nicht von Bedeutung nicht dargestellt.

In Fig.1 ist zusätzlich ein PV-Wechselrichter 3 dargestellt, der sowohl mit dem Versorgungsnetz 1, als auch mit dem elektrischen Verbraucher 2 verbunden ist. Oftmals ist der PV-Wechselrichter 3 auch mit einer elektrischen Speicherbatterie 5 verbunden, um überschüssige elektrische Energie in der Speicherbatterie 5 zwischenzuspeichern oder um gespeicherte Energie aus der Speicherbatterie zu entnehmen. Damit kann der PV-Wechselrichter 3 elektrische PV-Energie aus einer mit dem PV-Wechselrichter 3 verbundenen PV-Anlage 4 und/oder aus einer Speicherbatterie 5 sowohl in das Versorgungsnetz 1, als auch in den elektrischen Verbraucher 2 einspeisen. Der elektrische Verbraucher 2 kann damit sowohl vom Versorgungsnetz 1, als auch vom PV-Wechselrichter 3 mit elektrischer Energie versorgt werden, oder auch von beiden. Die Steuereinheit 11 des PV-Wechselrichter 3 sorgt für die korrekten Energieflüsse.

Die Steuereinheit 11 ist üblicherweise als mikroprozessorbasierte Hardware ausgeführt, auf der entsprechende Steuersoftware ausgeführt wird, könnte aber auch als integrierte Schaltung, beispielsweise als Anwendungsspezifische integrierte Schaltung (ASIC) oder Field Programmable Gate Array (FPGA), oder als analoge Schaltung realisiert sein, oder auch als beliebige Kombination dieser Möglichkeiten.

Der PV-Wechselrichter 3 erzeugt im Betrieb eine elektrische Netzspannung U_{N} mit einer Netzspannungsamplitude Û_{N} und mit einer Netzspannungsfrequenz f_{N}, und im Falle eines mehrphasigen Versorgungsnetzes 1 auch mit einer Netzspannungsphasenlage φ_{N} zwischen den einzelnen Phasen.

Im Netzbetrieb des PV-Wechselrichters 3 ist die Netzspannung U_{N} auf die Versorgungsnetzspannung U_{V} synchronisiert, sowohl hinsichtlich der Spannungsamplitude, der Spannungsfrequenz und gegebenenfalls auch hinsichtlich der Phasenlage. Der PV-Wechselrichter 3 erfasst im Netzbetrieb zumindest einen Netzparameter des elektrischen Versorgungsnetzes 1. Hierfür ist eine Netzmesseinheit 6 vorgesehen, die verschiedene Netzparameter des Versorgungsnetzes 1 erfasst, beispielsweise direkt misst oder aus gemessenen Größen berechnet, und an den PV-Wechselrichter 3, konkret an die Steuereinheit 11 des PV-Wechselrichters 3, übermittelt, beispielsweise über eine geeignete drahtlose oder drahtgebundene Datenverbindung 7, wie ein WLAN, eine Bluetooth-Verbindung, ein Datenbus (z.B. Modbus, LAN) oder auch eine Datenleitung. Der PV-Wechselrichter 3 könnte die Netzparameter aber bei geeigneter Verbindung mit dem Versorgungsnetz 1 natürlich auch selbst ermitteln. Hierzu könnte die Netzmesseinheit 6 auch im PV-Wechselrichter 3 vorgesehen sein.

Typische erfasste Netzparameter sind beispielsweise ein Spannungs- oder Strommomentanwert, die Versorgungsspannungsamplitude Ü_{V}, eine Versorgungsspannungsstromamplitude Î_{V}, die Versorgungspannungsfrequenz f_{V}, oder eine Drehrichtung einer mehrphasigen Wechselspannung.

"Erfassen eines Netzparameters" bedeutet hierbei, dass der Wert des Netzparameters laufend zu bestimmten Zeitpunkten (Abtastzeitpunkte) ermittelt wird (analog oder digital spielt keine Rolle). Beispielsweise könnte bei einer 50Hz-Spannung die Momentanspannung alle 1ms gemessen werden (was als Netzparameter verwendet werden kann), woraus dann mit einem Zeitabstand von 20ms auch eine Spannungsamplitude ermittelt werden kann (was als Netzparameter verwendet werden kann), beispielsweise als Maximalwert der Momentanwerte.

Ein sogenannter inselfähiger PV-Wechselrichter 3 ist in der Lage vom Netzbetrieb, in einen Inselbetrieb umzuschalten. Im Inselbetrieb ist der PV-Wechselrichter 3 vom elektrischen Versorgungsnetz 1 getrennt und der PV-Wechselrichter 3 erzeugt eine elektrische Ersatznetzspannung U_{E} mit einer Ersatznetzspannungsamplitude Û und mit einer Ersatznetzspannungsfrequenz f_{E}, und im Falle eines mehrphasigen Versorgungsnetzes 1 auch mit einer Ersatznetzspannungsphasenlage φ_{E} zwischen den einzelnen Phasen, und speist die Ersatznetzspannung U_{E} in den elektrischen Verbraucher 2 ein, um diesen mit elektrischer Energie zu versorgen. Gleichfalls kann auch im Inselbetrieb elektrische Energie in eine Speicherbatterie 5 eingespeist oder von dieser entnommen werden. Im Inselbetrieb bildet der PV-Wechselrichter 3 ein Inselnetz aus, mit dem PV-Wechselrichter 3 als Energiequelle, die einen elektrischen Verbraucher 2 versorgt.

Für die Trennung des PV-Wechselrichters 3 vom Versorgungsnetz 1 zur Umschaltung in den Inselbetrieb ist eine örtlich vom PV-Wechselrichter 3 getrennte und zwischen dem Versorgungsnetz 1 und dem PV-Wechselrichter 3 angeordnete Trenneinheit 8 mit einer Netztrennstelle 9 vorgesehen. Die örtlich vom PV-Wechselrichter 3 separierte Trennung ermöglicht es, die Trenneinheit 8 irgendwo an geeigneter Stelle anzuordnen, was die Installation, insbesondere das Nachrüsten in einer bestehenden elektrischen Anlage, erleichtert. Die Netztrennstelle 9 ist eine geeignete (gegebenenfalls mehrphasige) elektrische Schalteinrichtung, wie ein Relais, ein Leistungsschalter, ein Schütz usw.

Die Netzmesseinheit 6 könnte auch in der Trenneinheit 8 integriert sein.

Nach einem ersten Aspekt der gegenständlichen Erfindung, entscheidet die Trenneinheit 8 nicht selbst über das Öffnen der Netztrennstelle 9 zur Umschaltung in den Inselbetrieb, sondern erhält vom PV-Wechselrichter 3, beispielsweise über eine Steuerleitung 10, einen Schaltbefehl S zum Öffnen der Netztrennstelle 9. Der PV-Wechselrichter 3 sendet den Schaltbefehl S zum Öffnen der Netztrennstelle 9 in Abhängigkeit von einem vorgegebenen Umschaltkriterium. Der PV-Wechselrichter 3, insbesondere die Steuereinheit 11 des PV-Wechselrichters 3, ist eingerichtet, das Umschaltkriterium zu erkennen und als Folge daraus, das Öffnen der Netztrennstelle 9 über den Steuerbefehl S zu veranlassen.

Das Umschaltkriterium kann beispielsweise auf einem erfassten Netzparameter des elektrischen Versorgungsnetzes 1 basieren. Um die Entscheidung zum Öffnen treffen zu können, erfasst der PV-Wechselrichter 3 hierfür im Netzbetrieb mit der Netzmesseinheit 6 zumindest einen ersten Netzparameter P1 des elektrischen Versorgungsnetzes 1. Der erste Netzparameter P1 ist beispielsweise zumindest einer der oben erwähnten Netzparameter. Wenn der zumindest eine erfasste erste Netzparameter P1 eine vorgegebene erste Auslösebedingung erfüllt (Umschaltkriterium), öffnet der PV-Wechselrichter 3 die Netztrennstelle 9 in der Trenneinheit 8, beispielsweise über einen Schaltbefehl S über die Steuerleitung 10, wodurch der PV-Wechselrichter 3 vom Versorgungsnetz 1 getrennt wird. Damit wird der PV-Wechselrichter 3 vom Netzbetrieb in den Inselbetrieb umgeschaltet.

Die erste Auslösebedingung wird üblicherweise vom lokalen Netzbetreiber des Versorgungsnetzes 1 vorgegebenen. Beispielsweise können Spannungsamplituden- oder Frequenzlimits vorgegeben sein. Fällt die Versorgungsnetzspannungsamplitude Û_{V} beispielsweise unterhalb eines Spannungsamplitudenlimits könnte eine vorgegebene Auslösebedingung gegeben sein. Oftmals wird vom Netzbetreiber auch ein sogenanntes bekanntes Fault-Ride-Through (FTR) Verhalten gefordert, nach dem ein bestimmtes Limit für eine bestimmte Zeit verletzt werden muss, damit eine Auslösebedingung erfüllt ist. Die erste Auslösebedingung kann auch aus verschiedenen einzelnen Bedingungen bestehen, beispielsweise ein Spannungslimit mit FTR-Verhalten. Es könnte auch eine strengere Auslösebedingung als eine vom Netzbetreiber vorgegebene Auslösebedingung vorgesehen sein.

Die erste Auslösebedingung wird von der Steuereinheit 11 des PV-Wechselrichters 3 überwacht, die hierzu auch den ersten erfassten Netzparameter P1 erhält, und die Steuereinheit 11 löst auch das Öffnen der Netztrennstelle 9 der Trenneinheit 8 mit dem Steuerbefehl S aus.

Als weiteres Umschaltkriterium kann der PV-Wechselrichter 3, insbesondere die Steuereinheit 11 des PV-Wechselrichters 3, externe, versorgungsnetzrelevante Information erhalten, beispielsweise über eine geeignete Datenschnittstelle oder aus dem Internet. Eine versorgungsnetzrelevante Information ist eine Information, die Angaben zum Versorgungsnetz 1 enthält, die keine elektrischen Netzparameter sind, oder den Betrieb des Versorgungsnetzes 1 beeinflussende Information. Der PV-Wechselrichter 3, in der Regel die Steuereinheit 11, wertet die versorgungsnetzrelevante Information als Umschaltkriterium aus, um das das Öffnen der Netztrennstelle 9 der Trenneinheit 8 mit dem Steuerbefehl S auszulösen.

Eine versorgungsnetzrelevante Information kann beispielsweise ein aktueller Einspeisetarif und/oder Stromtarif des Versorgungsnetzes 1 sein. Der PV-Wechselrichter 3 kann dann als Umschaltkriterium entscheiden, ob es günstiger ist, in den Inselbetrieb umzusteigen. Hierfür kann der PV-Wechselrichter 3 auch noch weitere Information berücksichtigen, wie beispielsweise der Speicherstand einer vorhandenen Speicherbatterie oder eine erzeugte elektrische Leistung der PV-Anlage.

Eine versorgungsnetzrelevante Information kann aber auch eine Wettervorhersage sein. Wird beispielsweise ein Gewitter am Standort des PV-Wechselrichters 3 vorhergesagt, könnte der PV-Wechselrichter 3 rechtzeitig in den Inselbetrieb umschalten, um die elektrische Anlage vor Stromspitzen aus dem Versorgungsnetz 1 zu schützen.

Der PV-Wechselrichter 3, insbesondere die Steuereinheit 11 des PV-Wechselrichters 3, kann aber auch selbst ein Umschaltkriterium erzeugen, das das Umschalten in den Inselbetrieb auslöst. Es könnte beispielswiese vorgesehen sein, dass der PV-Wechselrichter 3 regelmäßig einen Selbsttest ausführt, der auch das Umschalten in den Inselbetrieb umfasst.

Nicht zuletzt könnte dem PV-Wechselrichter 3 das Umschaltkriterium auch von extern zugeführt werden. Hierbei kann der PV-Wechselrichter 3 einen externen Umschaltbefehl erhalten, beispielsweise von einer übergeordneten Steuerung oder aus einer mit dem PV-Wechselrichter 3 verbundenen externen Anwendungssoftware (App), beispielsweise ausgelöst vom Betreiber des PV-Wechselrichters 3.

Es können auch mehrere Umschaltkriterien im PV-Wechselrichter 3 vorgesehen sein, wobei der PV-Wechselrichter 3 eingerichtet ist, in den Inselbetrieb umzuschalten, wenn zumindest ein Umschaltkriterium erfüllt ist oder wenn eine bestimmte Kombination verschiedener Umschaltkriterien erfüllt ist.

Um eine reibungslose elektrische Versorgung des Verbrauchers 2 im Inselbetrieb sicherzustellen, setzt der PV-Wechselrichter 3 die Einspeisung der zum Zeitpunkt der Öffnung der Netztrennstelle 9 erzeugten elektrischen Netzspannung U_{N} fort. Der PV-Wechselrichter 3 speist die erzeugte Netzspannung U_{N} im Inselbetrieb als Ersatznetzspannung U_{E} in den Verbraucher 2 des Inselnetzes ein.

Damit ist eine nahtlose und unterbrechungsfreie Versorgung des Verbrauchers 2 bei Umschaltung vom Netzbetrieb in den Inselbetrieb sichergestellt (natürlich nur wenn PV-Energie aus der PV-Anlage 4 oder elektrische Energie aus einer Speicherbatterie 5 verfügbar ist).

Für die Umschaltung aus dem Inselbetrieb in den Netzbetrieb wird wie folgt vorgegangen.

Im Inselbetrieb erfasst der PV-Wechselrichter 3 zumindest einen zweiten Netzparameter P2 des elektrischen Versorgungsnetzes 1. Der zweite Netzparameter P2 ist beispielsweise zumindest einer der oben erwähnten Netzparameter. Der zweite Netzparameter P2 kann, muss aber nicht, der gleiche Netzparameter wie der erste Netzparameter P1 sein. Wenn der zumindest eine zweite Netzparameter P2 eine zweite Auslösebedingung erfüllt, bereitet der PV-Wechselrichter 3 die Umschaltung in den Netzbetrieb aus dem Inselbetrieb vor. Hinsichtlich der zweiten Auslösebedingung gilt das oben zur ersten Auslösebedingung gesagte in analoger Weise. Auch die zweite Auslösebedingung wird von der Steuereinheit 11 des PV-Wechselrichters 3 überwacht, die dann die nötigen weiteren Schritte auslöst.

Zur Umschaltung in den Netzbetrieb passt der PV-Wechselrichter 3 im Inselbetrieb zuerst die im Inselbetrieb erzeugte Ersatznetzspannung U_{E} an eine vorgegebene Versorgungsnetzspannung U_{V} des Versorgungsnetzes 1 mit einer Versorgungsnetzspannungsamplitude Û_{V} und mit einer Versorgungsnetzspannungsfrequenz f_{V}, und im Falle eines mehrphasigen Versorgungsnetzes bedarfsweise auch mit einer Versorgungsnetzspannungsphasenlage φ_{V} zwischen den Phasen, an. Das ist deshalb erforderlich, weil die Ersatznetzspannung U_{E} im Inselbetrieb nicht zwingend mit der vorgegebenen Versorgungsspannung U_{V} übereinstimmen muss und in der Regel nicht übereinstimmen wird. Die Versorgungsnetzspannung U_{V} wird dabei in der Regel wieder vom Netzbetreiber vorgegeben.

Um mögliche Sprünge in der Versorgungsnetzspannungsamplitude Û_{V} oder Versorgungsnetzspannungsfrequenz f_{V} zu vermeiden, erfolgt die Anpassung vorzugsweise nicht sprunghaft, sondern schrittweise, beispielsweise in Form geeigneter Rampen.

Allerdings hat man nach dem Ausfall und der Wiederinbetriebnahme des Versorgungsnetzes 1 im PV-Wechselrichter 3 keine Information darüber, wie der Phasenbezug zwischen der aktuellen Versorgungsnetzspannung U_{V} im (noch vom PV-Wechselrichter 3 getrennten) Versorgungsnetz 1 und der aktuellen vom PV-Wechselrichter 3 erzeugten Ersatznetzspannung U_{E} im Inselnetz ist. Damit der PV-Wechselrichter 3 eine Netzspannung U_{N} in das Versorgungsnetz 1 einspeisen darf, muss aber sichergestellt sein, dass die erzeugte Netzspannung U_{N}, neben Frequenz und Spannungsamplitude auch hinsichtlich des Phasenbezugs (zumindest hinreichend) synchron mit der Versorgungsnetzspannung U_{V} ist. Anders ausgedrückt, soll eine Phase der vom PV-Wechselrichter 3 erzeugten Netzspannung U_{N} einen Nulldurchgang haben, wenn die zugehörige Phase der Versorgungsnetzspannung U_{V} mit gleicher Frequenz einen Nulldurchgang hat. Damit wären die beiden Spannungen phasensynchron.

Um korrekten Phasenbezug zu erreichen, passt der PV-Wechselrichter 3 zum Umschalten in den Netzbetrieb die Ersatznetzspannungsfrequenz f_{E} der Ersatznetzspannung U_{E} nicht exakt an die vorgegebene Versorgungsnetzspannungsfrequenz f_{V} der vorgegebenen Versorgungsnetzspannung U_{V} an, sondern auf eine Ersatznetzspannungsfrequenz f_{E}, die um maximal 2 Hz, vorzugsweise maximal 1 Hz, von der vorgegebenen Versorgungsnetzspannungsfrequenz f_{V} abweicht. Die Ersatznetzspannung U_{E} und die vorgegebene Versorgungsnetzspannung U_{V} sind somit nach der Anpassung nicht frequenzsynchron.

"Abweichen" bedeutet in diesem Zusammenhang, dass der Frequenzunterschied zwischen der Versorgungsnetzspannungsfrequenz f_{V} und der Ersatznetzspannungsfrequenz f_{E} jedenfalls >0 Hz ist, also ein Unterschied zwischen der Versorgungsnetzspannungsfrequenz f_{V} und der Ersatznetzspannungsfrequenz f_{E} besteht. Je geringer der Frequenzunterschied zwischen der Versorgungsnetzspannungsfrequenz f_{V} und der Ersatznetzspannungsfrequenz f_{E} ist, umso länger dauert es, bis Phasensynchronität erreicht wird. Daher sollte der Frequenzunterschied vorteilhaft nicht unter 0,1 Hz, vorzugsweise nicht unter 0,2 Hz oder 0,3 Hz sein. Grundsätzlich ist jeder beliebige Frequenzunterschied zwischen 0,1 Hz und 2Hz möglich, wobei die Grenzwerte Teil des Bereichs sind.

Durch den eingestellten Frequenzunterschied wird erreicht, dass sich der Phasenbezug der Ersatznetzspannung U_{E} zur Versorgungsnetzspannung U_{V} kontinuierlich und periodisch verschiebt. Die Periode dieser Verschiebung entspricht dem Kehrwert des Unterschieds zwischen den Frequenzen. Bei einem Unterschied von 0,2Hz, wäre diese Periode somit 5s. Würde man die Superposition der Ersatznetzspannung U_{E} und der Versorgungsnetzspannung U_{V} über der Zeit auftragen, ergäbe sich eine Schwebung mit dieser Periode, bei der die Resultierende der Superposition der beiden Spannungen eine mit dieser Periode periodisch zu- und abnehmende Amplitude aufweist. Wenn die Resultierende klein ist und gegen Null geht, dann hat man hohe Phasensynchronität der beiden Spannungen.

Das, und insbesondere auch der Umstand der sehr langen Periode, ermöglicht der Trenneinheit 8 nach dieser Anpassung der Ersatznetzspannung U_{E} an die Versorgungsnetzspannung U_{V} mit leicht abweichender Ersatznetzspannungsamplitude f_{E} bei geöffneter Netztrennstelle 9 einen Phasenlagenunterschied zwischen zumindest einer Phase der Versorgungsnetzspannung U_{V} und einer zugehörigen Phase der Ersatznetzspannung U_{E} zu erfassen. Die Trenneinheit 8 ist eingerichtet, im Inselbetrieb die Netztrennstelle 9 selbstständig zu schließen, wenn der erfasste Phasenlagenunterschied einen vorgegebenen Phasenlagengrenzwert unterschreitet, um den PV-Wechselrichter 3 vom Inselbetrieb in den Netzbetrieb umzuschalten. Der Phasenlagengrenzwert kann beispielsweise ±30°, vorzugsweise ±10°, noch besser ±5° oder bis ±1°, sein (wobei jeder beliebige Gradwert zwischen 30° und 1° möglich ist und die Grenzwerte Teil des Bereichs sind).

Die Umschaltung vom Inselbetrieb in den Netzbetrieb wird damit gemäß einem weiteren Aspekt der Erfindung von der Trenneinheit 8 selbstständig veranlasst, ohne dass der PV-Wechselrichter 3 hierzu etwas beitragen muss, und zu einem Zeitpunkt an dem ausreichende Phasensynchronität zwischen der Versorgungsnetzspannung U_{V} und der erzeugten Ersatznetzspannung U_{E} herrscht. Damit ist auch eine nahtlose und unterbrechungsfreie Umschaltung vom Inselbetrieb in den Netzbetrieb sichergestellt.

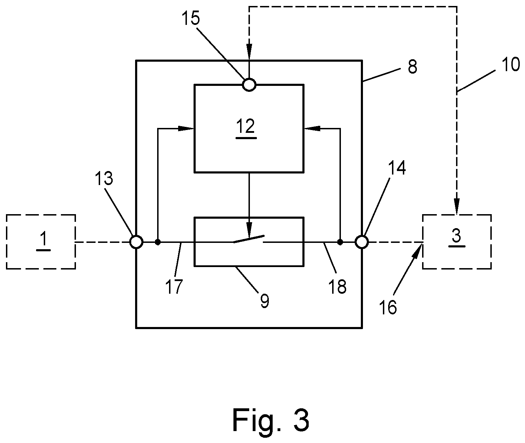

Die Trenneinheit 8 kann hierzu wie in Fig.3 dargestellt ausgeführt sein. An der Trenneinheit 8 ist ein Versorgungsnetzanschluss 13, an dem das Versorgungsnetz 1 angeschlossen werden kann, und ein Wechselrichteranschluss 14, an dem der PV-Wechselrichter 3 angeschlossen werden kann, vorgesehen. Der Wechselrichteranschluss 14 ist in Verwendung der Trenneinheit 8 mit einem Spannungsausgang 16 des PV-Wechselrichters 3, an dem die vom PV-Wechselrichter 3 erzeugte Netzspannung U_{N} (im Netzbetrieb) bzw. die Ersatznetzspannung U_{E} (im Inselbetrieb) anliegt, verbunden. Die Netztrennstelle 9 ist zwischen dem Versorgungsnetzanschluss 13 und dem Wechselrichteranschluss 14 geschaltet und unterbricht somit bei offener Netztrennstelle 9 eine elektrische Verbindung 17 zwischen dem Versorgungsnetzanschluss 13 und dem Wechselrichteranschluss 14.

In der Trenneinheit 8 ist ferner eine Phasenlagenerkennungseinheit 12 vorgesehen. Die Phasenlagenerkennungseinheit 12 kann als auf einem Mikroprozessor ausgeführte Software oder als elektrische Schaltung ausgeführt sein, oder auch als Kombination daraus. Die Phasenlagenerkennungseinheit 12 ist mit beiden Seiten der Netztrennstelle 9 verbunden, also einmal mit der elektrischen Verbindungsleitung 17 zwischen dem Versorgungsnetzanschluss 13 und der Netztrennstelle 9 und einmal mit der elektrischen Verbindungsleitung 18 zwischen dem Wechselrichteranschluss 14 und der Netztrennstelle 9. Die Phasenlagenerkennungseinheit 12 ist damit in Verwendung der Trenneinheit 8 einmal mit dem Versorgungsnetz 1 (in Fig.3 gestrichelt dargestellt) und ein einmal mit dem PV-Wechselrichter 3 (in Fig.3 gestrichelt dargestellt) verbunden.

Damit kann die Phasenlagenerkennungseinheit 12 in Verwendung der Trenneinheit 8 die Versorgungsnetzspannung U_{V} (zumindest die davon benötigten Teile) und die vom PV-Wechselrichter 3 erzeugte Ersatznetzspannung U_{E} (zumindest die davon benötigten Teile) (oder im Netzbetrieb die Netzspannung U_{N}) erfassen. "Erfassen" hat hierbei wieder die gleiche Bedeutung wie bereits oben zum Netzparameter ausgeführt. Die Phasenlagenerkennungseinheit 12 steuert zum Umschalten vom Inselbetrieb in den Netzbetrieb selbstständig die Netztrennstelle 9 zum Schließen an.

An die Phasenlagenerkennungseinheit 12 kann in Verwendung auch die Steuerleitung 10 (in Fig.3 gestrichelt dargestellt) angeschlossen sein, wofür an der Phasenlagenerkennungseinheit 12, wie in der Ausführung der Fig.3, auch ein Steueranschluss 15 vorgesehen sein kann.

Die Phasenlagenerkennungseinheit 12 kann auch ausgeführt sein, um zusätzlich vom PV-Wechselrichter 3 den Schaltbefehl S zum Öffnen der Netztrennstelle 9 zu erhalten (beispielsweise über die Steuerleitung 10), um vom Netzbetrieb in den Inselbetrieb umzuschalten. Für diese Umschaltung kann aber auch eine separate, von der Phasenlagenerkennungseinheit 12 getrennte Baueinheit in der Trenneinheit 8 vorgesehen sein, um die Netztrennstelle 9 anzusteuern.

Da im Netzbetrieb der PV-Wechselrichter 3 auf die Versorgungsnetzspannung U_{V} synchronisiert wird (wie oben erläutert), werden allfällige verbleibende geringe Abweichungen der Phasenlage durch den Netzbetrieb des PV-Wechselrichter 3 im Netzbetrieb ausgeglichen . Der PV-Wechselrichter 3 kann nach dem Umschalten in den Netzbetrieb auch noch die Netzspannungsfrequenz f_{N}, die ja noch geringfügig von der vorgegebenen Versorgungsspannungsfrequenz f_{V} abweicht, an die Versorgungsspannungsfrequenz f_{V} anpassen. Alternativ kann auch vorgesehen sein, dass der PV-Wechselrichter 3 abgeschaltet und neu gestartet wird, sobald das Versorgungsnetz 1 im Netzbetrieb mit dem Verbraucher 2 verbunden ist. Durch den Neustart synchronisiert sich der PV-Wechselrichter 3 auf das Versorgungsnetz 1. Der Verbraucher 2 ist dabei nahtlos mit elektrischer Energie versorgt und es wird lediglich die Einspeisung von PV-Energie in das Versorgungsnetz 1 kurz unterbrochen.

Der PV-Wechselrichter 3 könnte einen Unterschied der Phasensynchronität der Versorgungsnetzspannung U_{V} und der selbst erzeugten Netzspannung U_{N} natürlich auch selbst feststellen. Hierzu müsste der PV-Wechselrichter 3 aber erforderliche Netzparameter, wie beispielsweise Spannungsmomentantwerte, mit ausreichend hohen Abtastzeiten erfassen, was aber den Aufwand für die Erfassung der Netzparameter deutlich erhöhen würde. Abgesehen davon wären die zeitbezogenen Anforderungen an die Kommunikation zwischen PV-Wechselrichter 3 und der davon getrennten Trennstelle 8 zum Umschalten in den Netzbetrieb hoch, da die Umschaltung bei Phasensynchronität erfolgen soll und die Umschaltung daher sehr rasch nach Feststellung der Phasensynchronität durchgeführt werden müsste. Nicht zuletzt müsste die Trenneinheit 8, bzw. die Netztrennstelle 9 der Trenneinheit 8, auch in der Lage sein, sehr rasch zu schalten. All das würde den Aufwand für die Umschaltung erheblich vergrößern.

Durch das erfindungsgemäße Vorgehen wird das umgangen. Nachdem sich der Phasenbezug aufgrund der langen Periode der Schwebung nur sehr langsam ändert (jedenfalls deutlich langsamer als die Schwingung der Ersatznetzspannung U_{E} oder der Versorgungsnetzspannung U_{V}) bestehen geringe zeitbezogene Anforderungen und es können auch sehr langsam schaltende Trenneinheiten 8, bzw. Netztrennstellen 9, verwendet werden.

Nach dem Umschalten in den Netzbetrieb (also nach dem Schließen der Netztrennstelle 9) ist die Ersatznetzspannung U_{E} aus dem vorherigen Inselbetrieb wieder die Netzspannung U_{N} im Netzbetrieb.

Eine mögliche Implementierung der Feststellung der Phasensynchronität zwischen Versorgungsnetzspannung U_{V} und Ersatznetzspannung U_{E} wird anhand Fig.2 erläutert. Das könnte beispielsweise in der Phasenlagenerkennungseinheit 12 implementiert sein.

In Fig.2 zeigt die obere Kurve den Verlauf der Versorgungsnetzspannung U_{V} und der Ersatznetzspannung U_{E}, wobei nur positive Halbwellen dargestellt sind. Zur Auswertung der Phasensynchronität werden die negativen Halbwellen ausgefiltert und die positiven Halbwellen in Rechteckspannungen umgewandelt (Fig.2 Mitte). Das lässt sich beispielsweise schaltungstechnisch mit einem Optokoppler und einer Diode am Eingang des Optokopplers für jede der Spannungen realisieren. Der sich ändernde Phasenversatz Δφ zwischen den beiden Spannungen, der durch die leicht abweichenden Frequenzen und die entstehende Schwebung verursacht wird, ist in Fig.2 erkennbar. Der Phasenversatz Δφ wird nun mit dem Phasenlagengrenzwert verglichen. Das ist im Ausführungsbeispiel nach Fig.2 so implementiert, dass die Zeitdauer tₒ der Überlappung der beiden Spannungen ermittelt wird, was in Fig.2 unten zur Veranschaulichung angedeutet ist. Das kann einfach mittels eines logischen "UND" der beiden Spannungen erfolgen. Je größer die Zeitdauer tₒ wird, umso höher ist die Phasensynchronität. Die Phasensynchronität besteht für eine gewisse Zeitspanne (abhängig vom Phasenlagengrenzwert), dann wird die Zeitdauer tₒ wieder kleiner, was sich periodisch wiederholt. Es kann nun ein Grenzwert für die Zeitdauer tₒ festgelegt sein (was äquivalent zum Phasenlagengrenzwert ist). Wird der Grenzwert überschritten, dann wird Phasensynchronität erkannt und die Trenneinheit 8 kann das Schließen der Netztrennstelle 9 veranlassen. Hierbei kann noch vorgesehen sei, dass das Schließen nach der steigenden Flanke erfolgt. Zusätzlich könnte noch gefordert sein, dass die Zeitdauer tₒ den Grenzwert für eine bestimmte vorgegebene Zeit dauerhaft überschreitet, um zufällige Ereignisse auszuschließen. Die beschriebene Auswertung der Phasensynchronität lässt sich analog realisieren, kann aber auch digital realisiert sein. Natürlich kann die Phasensynchronität auch auf beliebige andere Weise analog oder digital bestimmt werden.

Grundsätzlich reicht es aus, wenn in einem mehrphasigen Versorgungsnetz 1 die Phasensynchronität nur einer elektrischen Phase der Versorgungsnetzspannung U_{V} mit der zugehörigen Phase der Ersatznetzspannung U_{E} festgestellt wird, weil die korrekte Phasenlage der Phasen untereinander vorausgesetzt werden kann. Allerdings ist es auch denkbar, die Phasensynchronität mehrere Phasen und auch aller Phasen festzustellen und die Umschaltung in den Netzbetrieb davon abhängig zu machen, dass die mehreren Phasen oder alle Phasen jeweils hinreichende Phasensynchronität aufweisen.

Nachfolgend werden weiter vorteilhafte Ausgestaltungen der Erfindung beschrieben.

Nach dem Umschalten vom Netzbetrieb in den Inselbetrieb setzt der PV-Wechselrichter 3 die Erzeugung der Netzspannung U_{N}, die im Inselbetrieb die Ersatznetzspannung U_{E} ist, fort. Das stellt sicher, dass es beim Umschalten zu keinen Frequenz- oder Amplitudensprüngen kommt, was den Betrieb des elektrischen Verbrauchers stören könnte. Andererseits arbeitet der PV-Wechselrichter 3 im Netzbetrieb immer synchron zur Versorgungsnetzspannung U_{V}, die aber vor der Umschaltung in den Inselbetrieb gestört ist. Daher ist es vorteilhaft, wenn der PV-Wechselrichter 3 die Ersatznetzspannung U_{E} nach Umschaltung in den Inselbetrieb auf eine für den Inselbetrieb vorgegebene Ersatznetzspannung U_{E} mit einer Ersatznetzspannungsamplitude Û_{E} und Ersatznetzspannungsfrequenz f_{E}, und im Falle eines mehrphasigen Versorgungsnetzes gegebenenfalls auch auf eine Ersatznetzspannungsphasenlage φ_{E}, ändert. Diese Änderung erfolgt vorzugsweise kontinuierlich oder schrittweise.

Um die Sicherheit im Betrieb des PV-Wechselrichters 3 zu erhöhen, kann die Trenneinheit 8 mit dem Öffnen der Netztrennstelle 9, was auch kurz danach umfasst, ein erstes Rückmeldesignal R1 an den PV-Wechselrichter 3 senden, beispielsweise über die Steuerleitung 10 und die Phasenlagenerkennungseinheit 12 oder einer separaten Baueinheit. Der PV-Wechselrichter 3 beendet die Einspeisung der Ersatznetzspannung U_{E} in das Inselnetz, wenn das erste Rückmeldesignal R1 nach Ablauf einer vorgegebenen Maximalzeitspanne beim PV-Wechselrichter 3 nicht eingegangen ist. Damit wird verhindert, dass sich durch eine fehlerhafte Verkabelung oder durch einen Hardwaredefekt im PV-Wechselrichter 3 oder in der Trenneinheit 8 im Inselbetrieb ein unerwünschter oder sogar gefährlicher Zustand einstellt. Zusätzlich könnte auch vorgesehen sein, dass die Änderung der Ersatznetzspannung U_{E} bei Umschaltung auf eine vorgegebene Ersatznetzspannung U_{E} im Inselbetrieb nur dann erfolgt, wenn das erste Rückmeldesignal R1 innerhalb der vorgegebenen Maximalzeitspanne, oder auch einer anderen vorgegebenen kürzen oder längeren Zeitspanne, im PV-Wechselrichter 3 ankommt.

Es kann ferner vorgesehen sein, dass der PV-Wechselrichter 3 während des Inselbetriebs ein Verriegelungssignal V an die Trenneinheit 8 sendet, beispielsweise über die Steuerleitung 10 und die Phasenlagenerkennungseinheit 12 oder einer separaten Baueinheit, um ein ungewolltes Schließen der Netztrennstelle 9 während des Inselbetriebs sicher zu verhindern. Das Verriegelungssignal V kann dauerhaft gesendet werden. Alternativ kann das Verriegelungssignal V einmalig an die Trenneinheit 8 gesendet werden und nur durch ein anderes Signal wieder aufgebhoben werden.

Zur Erhöhung der Betriebssicherheit des PV-Wechselrichter 3 kann vorgesehen sein, dass der PV-Wechselrichter 3 zur Vorbereitung der Umschaltung in den Netzbetrieb nach Anpassung der Ersatznetzspannung U_{E} (mit geringer Frequenzabweichung) an die vorgegebene Versorgungsnetzspannung U_{V} ein Freigabesignal F an die Trenneinheit 8 über die Steuerleitung 10 sendet und die Trenneinheit 8 die Netztrennstelle 9 nur schließt, wenn die Trenneinheit 8 zusätzlich zur Feststellung der Phasensynchronität das Freigabesignal F erhalten hat. Das verhindert das ungewollte Schließen der Netztrennstelle 9. Das Freigabesignal F kann das Verriegelungssignal V aufheben, sollte ein solches vorher an die Trenneinheit 8 gesendet worden sein.

Durch das Freigabesignal F hat der PV-Wechselrichter 3 aber auch die Möglichkeit die Umschaltung in den Netzbetrieb zu kontrollieren. Beispielsweise kann das Freigabesignal F nur dann gesendet werden, wenn das Versorgungsnetz 1 hinreichend stabil ist, beispielsweise über eine gewisse Zeitdauer hinreichend stabil, oder einen gewissen Netzzustand erreicht hat, was durch erfasste Netzparameter festgestellt werden kann.

Das Freigabesignal F kann auch darin gesehen werden, dass ein vorher gesendetes Verriegelungssignal V wieder weggeschaltet wird.

Um die Sicherheit im Betrieb des PV-Wechselrichters 3 zu erhöhen, kann weiters vorgesehen sein, dass die Trenneinheit 8 mit dem Schließen der Netztrennstelle 9, was auch kurz danach umfasst, ein zweites Rückmeldesignal R2 an den PV-Wechselrichter 3 sendet, beispielsweise über die Steuerleitung 10 der Phasenlagenerkennungseinheit 12 oder einer separaten Baueinheit. Der PV-Wechselrichter beendet die Erzeugung der Netzspannung U_{N} (die der Ersatznetzspannung U_{E} vor dem Umschalten entspricht) im Netzbetrieb, wenn das zweite Rückmeldesignal R2 nach Ablauf einer vorgegebenen maximalen Erkennungszeit beim PV-Wechselrichter 3 nicht eingegangen ist. Damit wird verhindert, dass sich durch eine fehlerhafte Verkabelung oder durch einen Hardwaredefekt im PV-Wechselrichter 3 oder in der Trenneinheit 8 im Netzbetrieb ein unerwünschter oder sogar gefährlicher Zustand einstellt.

## Patentansprüche

1. Verfahren zum Betreiben eines PV-Wechselrichters (3), wobei der PV-Wechselrichter (3) in einem Netzbetrieb mit einem elektrischen Versorgungsnetz (1) verbunden ist und eine mit dem PV-Wechselrichter (3) erzeugte elektrische Netzspannung (U_{N}) mit einer Netzspannungsamplitude (Û_{N}) und mit einer Netzspannungsfrequenz (f_{N}), und im Falle eines mehrphasigen Versorgungsnetzes (1) auch mit einer Netzspannungsphasenlage (φ_{N}), in das Versorgungsnetz (1) und/oder in einen mit dem PV-Wechselrichter (3) verbundenen elektrischen Verbraucher (2) einspeist und der PV-Wechselrichter (3) in einem Inselbetrieb vom elektrischen Versorgungsnetz (1) getrennt ist und eine mit dem PV-Wechselrichter (3) erzeugte elektrische Ersatznetzspannung (U_{E}) mit einer Ersatznetzspannungsamplitude (Û_{E}) und mit einer Ersatznetzspannungsfrequenz (f_{E}), und im Falle eines mehrphasigen Versorgungsnetzes (1) auch mit einer Ersatznetzspannungsphasenlage (φ_{E}), in den elektrischen Verbraucher (2) einspeist, wobei der PV-Wechselrichter (3) und der Verbraucher (2) im Inselbetrieb ein Inselnetz ausbilden, **dadurch gekennzeichnet, dass** der PV-Wechselrichter (3) im Netzbetrieb in Abhängigkeit von einem vorgegebenen Umschaltkriterium eine in einer örtlich vom PV-Wechselrichter (3) getrennten Trenneinheit (8) vorgesehene Netztrennstelle (9) zwischen dem Versorgungsnetz (1) und dem PV-Wechselrichter (3) öffnet, wodurch der PV-Wechselrichter (3) vom Versorgungsnetz (1) getrennt wird, um den PV-Wechselrichter (3) vom Netzbetrieb in den Inselbetrieb umzuschalten, wobei der PV-Wechselrichter (3) die Einspeisung der elektrischen Netzspannung (U_{N}) als Ersatznetzspannung (U_{E}) in den elektrischen Verbraucher (2) fortsetzt, **dass** der PV-Wechselrichter (3) im Inselbetrieb zumindest einen Netzparameter (P2) des elektrischen Versorgungsnetzes (1) erfasst, **dass** der PV-Wechselrichter (3) im Inselbetrieb die Ersatznetzspannung (U_{E}) an eine vorgegebene Versorgungsnetzspannung (U_{V}) des Versorgungsnetzes (1) mit einer Versorgungsnetzspannungsamplitude (Û_{V}) und mit einer Versorgungsnetzspannungsfrequenz (f_{V}), und im Falle eines mehrphasigen Versorgungsnetzes auch mit einer Versorgungsnetzspannungsphasenlage (φ_{V}), anpasst, wenn der zumindest eine Netzparameter (P2) eine vorgegebene Auslösebedingung erfüllt, wobei die Ersatznetzspannungsfrequenz (f_{E}) der Ersatznetzspannung (U_{E}) durch die Anpassung um maximal 2 Hz, vorzugsweise um maximal 1 Hz, von der Versorgungsnetzspannungsfrequenz (f_{V}) abweicht, **dass** die Trenneinheit (8) nach der Anpassung der Ersatznetzspannung (U_{E}) an die Versorgungsnetzspannung (U_{V}) bei geöffneter Netztrennstelle (9) einen Phasenlagenunterschied (Δφ) zwischen zumindest einer Phase der Versorgungsnetzspannung (U_{V}) und einer zugehörigen Phase der Ersatznetzspannung (U_{E}) ermittelt **und dass** die Trenneinheit (8) im Inselbetrieb die Netztrennstelle (9) selbstständig schließt, wenn der erfasste Phasenlagenunterschied (Δφ) einen vorgegebenen Phasenlagengrenzwert unterschreitet, um den PV-Wechselrichter (3) vom Inselbetrieb in den Netzbetrieb umzuschalten.

2. Verfahren nach Anspruch 1, **dadurch gekennzeichnet, dass** der PV-Wechselrichter (3) im Netzbetrieb zumindest einen weiteren Netzparameter (P1) des elektrischen Versorgungsnetzes (1) erfasst und die Netztrennstelle (9) öffnet, wenn der zumindest eine erfasste weitere Netzparameter (P1) als Umschaltkriterium eine vorgegebene weitere Auslösebedingung erfüllt.

3. Verfahren nach Anspruch 1 oder 2, **dadurch gekennzeichnet, dass** der PV-Wechselrichter (3) im Netzbetrieb als Umschaltkriterium von extern eine versorgungsnetzrelevante Information erhält und/oder der PV-Wechselrichter (3) selbst ein Umschaltkriterium erzeugt, das das Umschalten in den Inselbetrieb auslöst, und/oder das Umschaltkriterium dem PV-Wechselrichter (3) von extern zugeführt wird.

4. Verfahren nach einem der Ansprüche 1 bis 3, **dadurch gekennzeichnet, dass** der PV-Wechselrichter (3) die Ersatznetzspannung (U_{E}) nach Umschaltung in den Inselbetrieb auf eine für den Inselbetrieb vorgegebene Ersatznetzspannungsamplitude (Û_{E}) und Ersatznetzspannungsfrequenz (φ_{E}) ändert.

5. Verfahren nach einem der Ansprüche 1 bis 4, **dadurch gekennzeichnet, dass** die Trenneinheit (8) mit dem Öffnen der Netztrennstelle (9) ein erstes Rückmeldesignal (R1) an den PV-Wechselrichter (3) sendet, wobei der PV-Wechselrichter (3) die Einspeisung der Ersatznetzspannung (U_{E}) nach Ablauf einer vorgegebenen Maximalzeitspanne ohne Erhalt des ersten Rückmeldesignals (R1) beendet.

6. Verfahren nach einem der Ansprüche 1 bis 5, **dadurch gekennzeichnet, dass** der PV-Wechselrichter (3) während des Inselbetriebs ein Verriegelungssignal (V) an die Trenneinheit (8) sendet, um ein Schließen der Netztrennstelle (9) während des Inselbetriebs zu verhindern.

7. Verfahren nach einem der Ansprüche 1 bis 6, **dadurch gekennzeichnet, dass** der PV-Wechselrichter (3) zur Umschaltung in den Netzbetrieb nach Anpassung der Ersatznetzspannung (U_{E}) an die vorgegebene Versorgungsnetzspannung (U_{V}) ein Freigabesignal (F) an die Trenneinheit (8) sendet und die Trenneinheit (8) die Netztrennstelle (9) nur schließt, wenn die Trenneinheit (8) zusätzlich das Freigabesignal (F) erhalten hat.

8. Verfahren nach einem der Ansprüche 1 bis 7, **dadurch gekennzeichnet, dass** die Trenneinheit (8) mit dem Schließen der Netztrennstelle (9) ein zweites Rückmeldesignal (R2) an den PV-Wechselrichter (3) sendet, wobei der PV-Wechselrichter (3) die Einspeisung der Ersatznetzspannung (U_{E}) als Netzspannung (U_{N}) im Netzbetrieb nach Ablauf einer vorgegebenen maximalen Erkennungszeit ohne Erhalt des zweiten Rückmeldesignals (R2) beendet.

9. PV-Wechselrichter mit Trenneinheit (8), wobei ein Spannungsausgang des PV-Wechselrichters (3) mit einem Wechselrichteranschluss (14) der Trenneinheit (8) verbindbar ist und ein Versorgungsnetzanschluss (13) der Trenneinheit (8) bei Verwendung mit einem Versorgungsnetz (1) verbindbar ist, wobei der PV-Wechselrichter (3) eingerichtet ist, in einem Netzbetrieb über die Trenneinheit (8) mit einem elektrischen Versorgungsnetz (1) verbunden zu sein und eine elektrische Netzspannung (U_{N}) mit einer Netzspannungsamplitude (Û_{N}) und mit einer Netzspannungsfrequenz (f_{N}), und im Falle eines mehrphasigen Versorgungsnetzes auch mit einer Netzspannungsphasenlage (φ_{N}), in das Versorgungsnetz (1) und/oder in einen mit dem PV-Wechselrichter (3) verbundenen elektrischen Verbraucher (2) einzuspeisen und in einem Inselbetrieb über die Trenneinheit (8) vom elektrischen Versorgungsnetz (1) getrennt zu sein und eine elektrische Ersatznetzspannung (U_{E}) mit einer Ersatznetzspannungsamplitude (Û_{E}) und mit einer Ersatznetzspannungsfrequenz (f_{E}), und im Falle eines mehrphasigen Versorgungsnetzes auch mit einer Ersatznetzspannungsphasenlage (φ_{E}), in den elektrischen Verbraucher (2), der im Inselbetrieb zusammen mit dem PV-Wechselrichter (3) ein Inselnetz ausbildet, einzuspeisen, **dadurch gekennzeichnet, dass** die Trenneinheit (8) örtlich vom PV-Wechselrichter (3) getrennt und in Verwendung zwischen dem PV-Wechselrichter (3) und dem Versorgungsnetz (1) angeordnet ist, **dass** der PV-Wechselrichter (3) eingerichtet ist, im Netzbetrieb eine in der Trenneinheit (8) vorgesehene Netztrennstelle (9) zwischen dem Versorgungsnetz (1) und dem PV-Wechselrichter (3) in Abhängigkeit von einem vorgegebenen Umschaltkriterium zu öffnen, wodurch der PV-Wechselrichter (3) vom Versorgungsnetz (1) getrennt ist, um den PV-Wechselrichter (3) vom Netzbetrieb in den Inselbetrieb umzuschalten, und der PV-Wechselrichter (3) bei Umschaltung in den Inselbetrieb eingerichtet ist, die Einspeisung der elektrischen Netzspannung (U_{N}) als Ersatznetzspannung (U_{E}) in den elektrischen Verbraucher (2) fortzusetzen, **dass** der PV-Wechselrichter (3) eingerichtet ist, im Inselbetrieb zumindest einen Netzparameter (P2) des elektrischen Versorgungsnetzes (1) zu erfassen, **dass** der PV-Wechselrichter (3) eingerichtet ist, im Inselbetrieb die Ersatznetzspannung (U_{E}) an eine vorgegebene Versorgungsnetzspannung (U_{V}) des Versorgungsnetzes (1) mit einer Versorgungsnetzspannungsamplitude (Û_{V}) und mit einer Versorgungsnetzspannungsfrequenz (f_{V}), und im Falle eines mehrphasigen Versorgungsnetzes (1) auch mit einer Versorgungsnetzspannungsphasenlage (φ_{V}), anzupassen, wenn der zumindest eine Netzparameter (P2) eine vorgegebene Auslösebedingung erfüllt, wobei die Ersatznetzspannungsfrequenz (f_{E}) der Ersatznetzspannung (U_{E}) durch die Anpassung um maximal 2 Hz, vorzugsweise um maximal 1 Hz, von der Versorgungsnetzspannungsfrequenz (f_{V}) abweicht, **dass** in der Trenneinheit (8) eine Phasenlagenerkennungseinheit (12) vorgesehen ist und die Phasenlagenerkennungseinheit (12) eingerichtet ist, nach der Anpassung der Ersatznetzspannung (U_{E}) an die Versorgungsnetzspannung (U_{V}) bei geöffneter Netztrennstelle (9) einen Phasenlagenunterschied (Δφ) zwischen zumindest einer Phase der Versorgungsnetzspannung (U_{V}) und einer zugehörigen Phase der Ersatznetzspannung (U_{E}) zu ermitteln, **und dass** die Trenneinheit (8) eingerichtet ist, im Inselbetrieb die Netztrennstelle (9) selbstständig zu schließen, wenn der erfasste Phasenlagenunterschied (Δφ) einen vorgegebenen Phasenlagengrenzwert unterschreitet, um den PV-Wechselrichter (3) vom Inselbetrieb in den Netzbetrieb umzuschalten.

10. PV-Wechselrichter mit Trenneinheit nach Anspruch 9, **dadurch gekennzeichnet, dass** der PV-Wechselrichter (3) eingerichtet ist, im Netzbetrieb zumindest einen weiteren Netzparameter (P1) des elektrischen Versorgungsnetzes (1) zu erfassen, **und dass** der PV-Wechselrichter (3) eingerichtet ist, die Netztrennstelle (9) zwischen dem Versorgungsnetz (1) und dem PV-Wechselrichter (3) zu öffnen, wenn der zumindest eine erfasste weitere Netzparameter (P1) als Umschaltkriterium eine vorgegebene weitere Auslösebedingung erfüllt.

11. PV-Wechselrichter mit Trenneinheit nach Anspruch 9 oder 10, **dadurch gekennzeichnet, dass** der PV-Wechselrichter (3) eingerichtet ist, im Netzbetrieb als Umschaltkriterium von extern eine versorgungsnetzrelevante Information zu erhalten und/oder der PV-Wechselrichter (3) eingerichtet ist selbst ein Umschaltkriterium zu erzeugen, das das Umschalten in den Inselbetrieb auslöst, und/oder der PV-Wechselrichter (3) eingerichtet ist, das Umschaltkriterium von extern zu erhalten.

12. PV-Wechselrichter mit Trenneinheit nach einem der Ansprüche 9 bis 11, **dadurch gekennzeichnet, dass** eine Netzmesseinheit (6) vorgesehen ist, die in Verwendung des PV-Wechselrichters (3) mit der Trenneinheit (8) mit dem elektrischen Versorgungsnetz (1) verbunden ist und die eingerichtet ist, den Netzparameter (P2) und den weiteren Netzparameter (P1) zu erfassen und an den PV-Wechselrichter (3) zu übermitteln.

13. PV-Wechselrichter mit Trenneinheit nach Anspruch 12, **dadurch gekennzeichnet, dass** die Netzmesseinheit (6) örtlich getrennt von der Trenneinheit (8) und dem PV-Wechselrichter (3) angeordnet ist oder in der Trenneinheit (8) angeordnet ist **und dass** der PV-Wechselrichter (3) über eine Datenverbindung (7) mit der Netzmesseinheit (6) verbunden ist.
